Europäisches Patentamt

European Patent Office

Office européen des brevets

(19)

(11) Veröffentlichungsnummer: **0 554 831 A1**

## (12) EUROPÄISCHE PATENTANMELDUNG

(21) Anmeldenummer: **93101571.3**

(22) Anmeldetag: **02.02.93**

(51) Int. Cl.5: **G01N 23/202**

(30) Priorität: **04.02.92 DE 4203035**

(43) Veröffentlichungstag der Anmeldung:
**11.08.93 Patentblatt 93/32**

(84) Benannte Vertragsstaaten:
**DE DK FR GB IT SE**

(71) Anmelder: **Forschungszentrum Jülich GmbH**
**Wilhelm-Johnen-Strasse**
**W-5170 Jülich(DE)**

(72) Erfinder: **Widera, Martin**
**Artilleriestrasse 36**
**W-5170 Jülich(DE)**
Erfinder: **Krautwasser, Peter, Dr.**
**Am Brückenkopf 17**
**W-5170 Jülich(DE)**
Erfinder: **Schuster, Hans, Dr.**
**Colynshof 7**
**W-5100 Aachen(DE)**
Erfinder: **Nickel, Hubertus, Prof.**
**Am Waldeck 5**
**W-5170 Jülich(DE)**

(54) **Verfahren zur Bestimmung der Restlebensdauer von Kleinbauteilein durch Neutronen-Kleinwinkelstreuung.**

(57) Zur Bestimmung der Kriechdehnung ($\epsilon$) als Maß für die noch zur Verfügung stehende Restlebensdauer von betriebsbelasteten Kleinbauteilen, insbesondere Turbinenschaufeln, aus Legierungen, speziell Nickelbasislegierungen, durch Neutronen-Kleinwinkelstreuung (SANS) wird der Streuwinkel $q_{max}$ für den Maximalwert des Quotienten aus den Streuintensitäten ermittelt, die am Ort höchster Lasteinwirkung in Belastungsrichtung und senkrecht dazu gemessen werden. Aus experimentell bestimmten Eichkurven für $q_{max} = f(\epsilon)$ kann dann die gesuchte probenspezifische Kriechdehnung entnommen werden. Vorzugsweise werden die Eichkurven mit bei unterschiedlichen Temperaturen belasteten Proben aufgenommen. Das Verfahren wird insbesondere nach regenerierender HIP-Behandlung betriebsbelasteter Kleinbauteile zur Bestimmung ihrer Restlebensdauer angewandt.

FIG. 3

EP 0 554 831 A1

Die Erfindung bezieht sich auf ein Verfahren zur Bestimmung der Kriechdehnung ($\epsilon$) als Maß für die noch zur Verfügung stehende Restlebensdauer von betriebsbelasteten Kleinbauteilen aus Legierungen durch Neutronen-Kleinwinkelstreuung (SANS) unter Zugrundelegung von Eichkurven.

Die Betriebskosten einer Anlage, besonders bei stationären Turbinen und Flugtriebwerken, werden in erheblichem Umfang von der Einsatzzeit der Bauteile z.B. der Turbinenschaufeln bestimmt. Hohe Kosten entstehen zusätzlich bei den Inspektionen, die u.a. bei Flugturbinen nach vergleichsweise kurzen Intervallen vorgeschrieben sind.

Bei Turbinenschaufeln wird die zulässige Betriebsdauer einerseits durch die Änderung der Geometrie und daher durch die integrale Kriechdehnung, andererseits durch Überschreiten der Zeitstandfestigkeit bestimmt, die mit der lokalen Kriechdehnung korreliert ist. Die die Restlebensdauer eines Bauteils bestimmende lokale Kriechdehnung kann jedoch nicht gemessen werden. Ebensowenig ist eine hinreichend genaue Berechnung möglich, da die zeitabhängigen thermomechanischen Belastungen, z.B. wegen Belastungstransienten bei An-und Abfahrvorgängen, nicht genau bekannt sind. Zum Teil müssen daher nach vorgegebenen Prüfungsintervallen zerstörende Untersuchungen an Teilmengen von Bauteilen durchgeführt werden, die zu höherem Stückzahlbedarf führen. Außerdem ist die Übertragbarkeit der Prüfergebnisse auf die ungeprüften Komponenten nicht garantiert.

Als zerstörungsfreies Prüfverfahren wurden in einem Vortrag von P. Krautwasser u.a. anläßlich der Metallographie-Tagung vom 11. - 13.09.1991 in Friedrichshafen SANS-Messungen vorgestellt, bei denen die relative Streuintensität von Turbinenschaufeln bei einem festen Streuwinkel (auch als Impulsübertrag bezeichnet) $q = 0,9$ nm$^{-1}$ bestimmt und die zugehörige Restlebensdauer der Untersuchungsproben über eine mit Vergleichsproben aufgenommene Eichkurve für die Kriechdehnung in Abhängigkeit von der, an Proben nach unterschiedlichen Standzeiten mit vorgegebener Last und Temperatur (110 MPa und 950°C) gemessenen Streuintensität bei $q = 0,9$ nm$^{-1}$ ermittelt werden soll.

Neuere Untersuchungen haben jedoch gezeigt, daß auf diese Weise ermittelte Restlebensdauern mit erheblichen Unsicherheiten behaftet sind, da je nach vorgegebenem Spannungswert der Zeitstandbelastung unterschiedliche SANS-Intensitätswerte für eine bestimmte Kriechdehnung erhalten werden, so daß bei unbekannter Vorgeschichte des Prüflings keine brauchbaren Aussagen gemacht werden können.

Ziel der Erfindung war daher eine Verbesserung des Prüfverfahrens durch eine angemessenere Auswahl von Bestimmungsgrößen und Abwandlung der Art der Eichkurven.

Das zu diesem Zweck entwickelte erfindungsgemäße Verfahren der eingangs genannten Art ist im wesentlichen dadurch gekennzeichnet, daß man den Streuwinkel $q_{max}$ für den Maximalwert des Quotienten aus den am Ort höchster Lasteinwirkung in Belastungsrichtung und senkrecht dazu gemessenen Streuintensitäten ermittelt und die zugehörige probenspezifische Kriechdehnung aus einer mit Vergleichsproben aufgenommenen Eichkurve für $q_{max} = f(\epsilon)$ entnimmt.

Von besonderem Interesse im Zusammenhang mit der Erfindung sind Bestimmungen an Turbinenschaufeln bzw. Messungen an Kleinbauteilen aus Nickelbasislegierungen insbesondere ausscheidungsverfestigten Nickelbasislegierungen.

Eine weitere Optimierung der Bewertung von Prüfkörpern aufgrund von Neutronen-Kleinwinkelstreuung kann durch ergänzende Präzisierung der Eichkurven für Lasteinwirkungen bei unterschiedlichen Temperaturen erreicht werden.

Das erfindungsgemäße Verfahren ist nicht nur für die Ermittlung der Restlebensdauer von betriebsbelasteten Bauteilen geeignet, sondern auch für die Qualitätskontrolle neuer Bauteile einsetzbar.

Auch kann erfindungsgemäß der Erfolg einer Regenerierung von betriebsbelasteten Kleinbauteilen durch eine HIP-Behandlung kontrolliert werden.

Nachfolgend wird das Prüfverfahren mehr im Detail beschrieben. Dabei wird auf die angefügten Diagramme Bezug genommen; es zeigen:

Figur 1    Die Neutronen-Streuintensitäten parallel und senkrecht zur Hauptspannungsrichtung als Funktion des Streuwinkels q (Streukurve) für eine Probe mit 7,65 % Kriechdehnung.

Figur 2    den Quotienten der Streuintensitäten als Funktion des Streuwinkels für Proben mit 1,01 und 7,65 % Kriechdehnung (Best. von $q_{max}$);

Figur 3    Kurven für $q_{max}$ in Abhängigkeit von der Kriechdehnung (Eichkurven) und

Figur 4    Vergleichskurven für die Kriechdehnung als Funktion der normierten Streuintensität bei $q = 0,9$ nm$^{-1}$ (bekannte Prüfmethode).

In einer typischen Anlage für Neutronen-Kleinwinkelmessungen werden Neutronen einer Wellenlänge im Bereich von 0,4 - 1,4 nm angewandt und die Intensität der gestreuten Neutronen in Abhängigkeit vom Streuwinkel q im Bereich von 0,02 bis 1,2 nm$^{-1}$ mit einem zweidimensional-ortempfinglichen Detektor oder zwei ortogonal positionierten linear-ortsempfindlichen Detektoren ermittelt.

Die Dicke der Prüfkörper liegt im allgemeinen im Bereich von 1 bis 20 mm und die Länge bis zu 2 m.

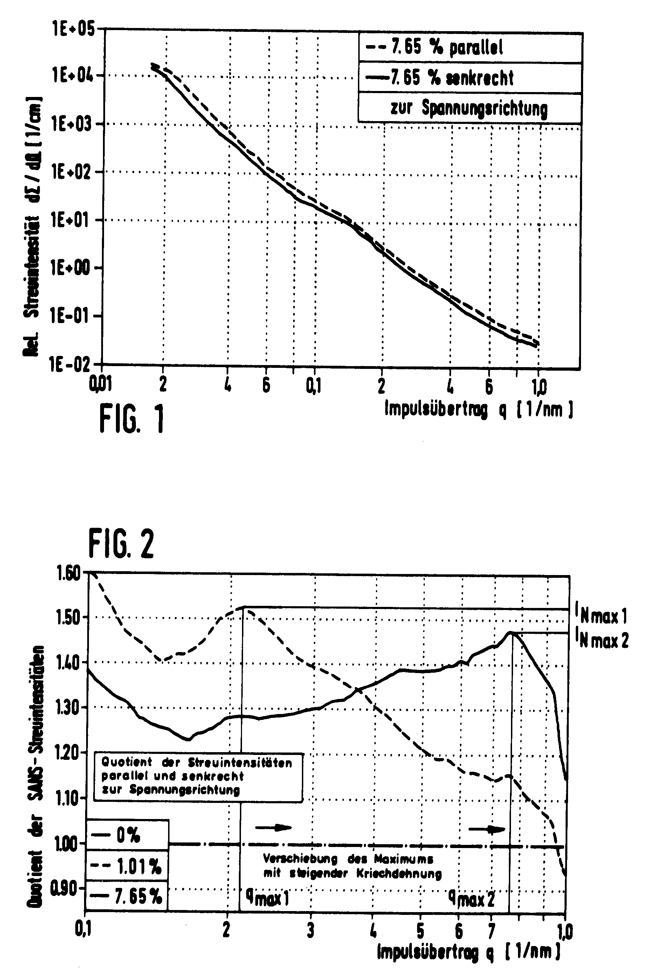

Die Streumessungen werden am Ort der höchsten thermomechanischen Belastung eines Bauteils durchgeführt, der durch die Auslegung vorgegeben ist. An dieser Stelle wird die Neutronen-Streuintensität parallel und senkrecht zur aufgetretenen Hauptspannungsrichtung in Abhängigkeit vom Streuwinkel q ermittelt (Fig.1). Weist das noch unbelastete, neue Bauteil eine richtungsabhängige, anisotrope Neutronenstreuung auf, werden die Intensitätsverteilungen (Streukurven) der betriebsbelasteten Bauteile parallel und senkrecht zur Hauptspannungsrichtung durch die entsprechenden Intensitätsverteilungen des neuen, unbelasteten Bauteils dividiert und die so gebildete Streuintensitätsrelation in Abhängigkeit vom Streuwinkel aufgetragen.

Der Quotient aus beiden Intensitätsverteilungen des betriebsbelasteten Bauteils parallel und senkrecht zur Hauptspannungsrichtung wird in Abhängigkeit vom q-Wert aufgetragen (Fig. 2) und so der im Bereich von $0,2 \leq q \leq 1,0 nm^{-1}$ liegende Wert $q_{max}$ gefunden.

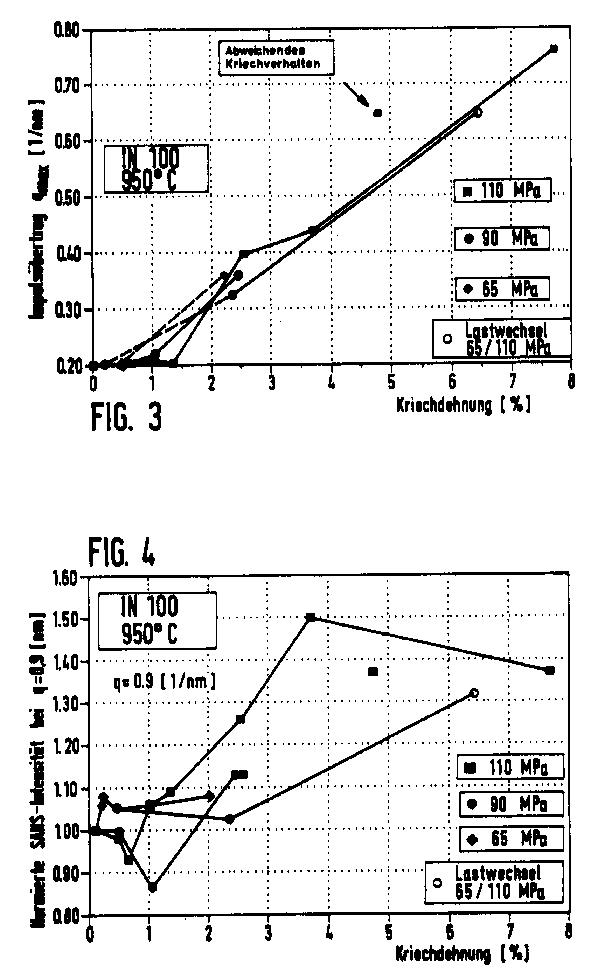

Mit diesem Wert $q_{max}$ wird dann an Hand der Eichkurve (Fig. 3) die entsprechende lokale Kriechdehnung an der Meßstelle des Bauteils ermittelt.

Dieses Diagramm ermöglicht insbesonders im technologisch relevanten Kriechdehnungsbereich zwischen ca. 1 und 6 % eine hinreichend genaue Bestimmung der lokalen Kriechdehnung in dem Bauteil, weitgehend unabhängig von der verursachenden Spannung

Die mit analogen Prüfkörpern nach bekannter Methode aufgenommenen Kurven für die bei konstantem Streuwinkel ($q = 0,9 nm^{-1}$) gemessene normierte SANS-Intensität in Abhängigkeit von der Kriechdehnung der Probe zeigt dagegen keine gesicherte Zuordnung des SANS-Signals zum Verbrauch an Einsatzdauer (Kriechdehnung) der probe.(Figur 4).

**Patentansprüche**

1. Verfahren zur Bestimmung der Kriechdehnung ($\epsilon$) als Maß für die noch zur Verfügung stehende Restlebensdauer von betriebsbelasteten Kleinbauteilen aus Legierungen durch Neutronen-Kleinwinkelstreuung (SANS) unter Zugrundelegung von Eichkurven,
**dadurch gekennzeichnet,**
daß man den Streuwinkel $q_{max}$ für den Maximalwert des Quotienten aus den am Ort höchster Lasteinwirkung in Belastungsrichtung und senkrecht dazu gemessenen Streuintensitäten ermittelt und die zugehörige Probenspezifische Kriechdehnung aus einer mit Vergleichsproben aufgenommenen Eichkurve für $q_{max} = f(\epsilon)$ entnimmt.

2. Verfahren nach Anspruch 1,
**dadurch gekennzeichnet,**
daß man die Bestimmung an Turbinenschaufeln als Kleinbauteile vornimmt.

3. Verfahren nach Anspruch 1 oder 2,
**dadurch gekennzeichnet,**
daß man Bauteile aus Nickelbasislegierungen überprüft.

4. Verfahren nach einem der vorangehenden Ansprüche,
**dadurch gekennzeichnet,**
daß die Werte der Eichkurve für $q_{max} = f(\epsilon)$ mit bei unterschiedlichen Temperaturen belasteten Proben aufgenommen worden sind.

5. Anwendung des Verfahrens nach einem der vorangehenden Ansprüche für die Qualitätskontrolle neuer Bauteile.

6. Verfahren nach einem der Ansprüche 1 bis 4,
**dadurch gekennzeichnet,**
daß die Restlebensdauer von betriebsbelasteten Kleinbauteilen nach einer regenerierenden HIP-Behandlung ermittelt wird.

**FIG. 1**

**FIG. 2**

FIG. 3

FIG. 4

Europäisches
Patentamt

**EUROPÄISCHER RECHERCHENBERICHT**

Nummer der Anmeldung

EP    93 10 1571

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | PROCEEDINGS OF THE 37TH. INTERNATIONAL INSTRUMENTATION SYMPOSIUM Mai 1991, SAN-DIEGO,USA Seiten 645 - 652 D.LEGGETT ET AL. 'NON-INVASIVE NEUTRON DIFFRACTION' * Seite 645 - Seite 649 * --- | 1 | G01N23/202 |
| A | NUCLEAR INSTRUMENTS AND METHODS Bd. 134, 1976, Seiten 369 - 378 C.P.GALOTTO ET AL. 'A COLD NEUTRON SMALL ANGLE SCATTERING DEVICE FOR TECHNOLOGICAL APPLICATIONS' * Seite 376 - Seite 378 * ----- | 1 | |

| | | | RECHERCHIERTE SACHGEBIETE (Int. Cl.5 ) |
|---|---|---|---|
| | | | G01N G07C G01L G01B |

Der vorliegende Recherchenbericht wurde für alle Patentansprüche erstellt

| Recherchenort | Abschlußdatum der Recherche | Prüfer |
|---|---|---|
| DEN HAAG | 28 APRIL 1993 | VAN DEN BULCKE E.J. |